# EUROPÄISCHE PATENTSCHRIFT

(11) **EP 4 196 691 B1**
(45) Veröffentlichungstag und Bekanntmachung des Hinweises auf die Patenterteilung: **24.09.2025**
(21) Anmeldenummer: 21759273.2
(22) Anmeldetag: 09.08.2021
(51) Int. Cl.: F16B 25/00, F16B 25/10, F16B 35/06

(54) **SCHRAUBE FÜR HOLZ, HOLZWERKSTOFFE UND HOLZÄHNLICHE MATERIALIEN**
SCREW FOR WOOD, WOOD-BASED MATERIALS AND WOOD-LIKE MATERIALS
VIS POUR BOIS, MATÉRIAUX À BASE DE BOIS ET MATÉRIAUX DE TYPE BOIS

(30) Priorität: 11.08.2020 DE 102020210174
(43) Veröffentlichungstag der Anmeldung: 21.06.2023
(73) Patentinhaber: SWG Schraubenwerk Gaisbach GmbH, 74638 Waldenburg (DE)
(72) Erfinder: ROLL, Patrick, 74523 Schwäbisch Hall (DE); GLATTBACH, Joachim, 74629 Pfedelbach (DE); GEIGER, Andrej, 74544 Michelbach an der Bilz (DE)
(74) Vertreter: Patentanwälte Ruff, Wilhelm, Beier, Dauster & Partner mbB
(86) Internationale Anmeldenummer: PCT/EP2021/072128
(87) Internationale Veröffentlichungsnummer: WO 2022/034004

(56) Entgegenhaltungen:
- DE-U1- 202007 018 179
- DE-U1- 29 811 536
- GB-A- 190 615 102
- JP-A- 2002 295 429
- US-A1- 2011 164 944

## Beschreibung

Die Erfindung betrifft eine Schraube für Holz, Holzwerkstoffe und holzähnliche Materialien, mit einem Schraubenschaft, einem Schraubenkopf mit einer Antriebsausbildung an einem Ende des Schraubenschafts und einem Schraubengewinde auf wenigstens einem Abschnitt des Schraubenschafts, wobei eine dem Schraubenschaft zugewandte Unterseite des Schraubenkopfs mit mehreren, in Umfangsrichtung voneinander beabstandeten Fräszähnen versehen ist.

Aus der US-Offenlegungsschrift US 2011/0164944 A1 ist eine Schraube für Holz, Holzwerkstoffe und holzähnliche Materialien mit einem Schraubenschaft, einem Schraubenkopf mit einer Antriebsausbildung an einem Ende des Schraubenschafts und einem Schraubengewinde auf wenigstens einem Abschnitt des Schraubenschafts bekannt. Eine dem Schraubenschaft zugewandte Unterseite des Schraubenkopfs ist mit mehreren, in Umfangsrichtung voneinander beabstandeten Fräszähnen versehen. Die Fräszähne weisen jeweils eine geradlinige Fräskante auf. Eine Höhe jedes Fräszahns verringert sich ausgehend von der Fräskante in beiden Umfangsrichtungen. Die Fräszähne weisen jeweils eine rautenförmige Grundfläche auf und sind symmetrisch zur Fräskante ausgebildet. Zwischen einem dem Schraubenkopf abgewandten unteren Ende der Fräszähne und dem Beginn eines Schraubengewindes auf dem Schaft ist der Schaft glatt.

Aus der deutschen Gebrauchsmusterschrift DE 298 11 536 U1 ist eine Schraube für Holzwerkstoffe bekannt, die an einer dem Schraubenschaft zugewandten Unterseite des Kopfs mehrere in Umfangsrichtung voneinander beabstandete Fräszähne aufweist. Die Fräszähne weisen jeweils eine geradlinige Fräskante auf. Zwischen einem dem Schraubenschaft zugewandten Ende der Fräszähne und dem Beginn eines Schraubengewindes ist ein Fräsabschnitt auf dem Schaft angeordnet. Der Fräsabschnitt weist wendelartig angeordnete Schabeleisten auf.

Aus der deutschen Gebrauchsmusterschrift DE 20 2007 018 179 U1 ist eine Schraube für Holzwerkstoffe mit einem Schraubenkopf mit einer Antriebsausbildung an einem Ende des Schraubenschafts und einem Schraubengewinde auf wenigstens einem Abschnitt des Schraubenschafts bekannt. Eine dem Schraubenschaft zugewandte Unterseite des Schraubenkopfs ist mit mehreren, in Umfangsrichtung voneinander beabstandeten Fräszähnen versehen. Zwischen einem dem Schaft zugewandten Ende der Fräszähne und dem Beginn des Schraubengewindes ist ein Fräsabschnitt mit mehreren, wendelförmig angeordneten Fräskanten vorgesehen.

Aus der britischen Patentschrift GB 15102 ist eine Schraube für Holzwerkstoffe bekannt, die an einer Unterseite des Schraubenkopfs mehrere, in Umfangsrichtung voneinander beabstandete Fräszähne aufweist. Die Fräszähne können bei einer Ausführungsform in wendelartige Fräskanten übergehen, die zwischen einer Unterseite des Schraubenkopfs und einem Beginn des Schraubengewindes angeordnet sind. Die Steigung der wendelartigen Fräszähne am Schraubenschaft ist deutlich größer als eine Steigung des Schraubengewindes.

Aus der japanischen Offenlegungsschrift JP 2002295429 A ist eine Schraube für Holzwerkstoffe bekannt, die an einer dem Schraubenschaft zugewandten Unterseite des Schraubenkopfs mehrere in Umfangsrichtung voneinander beabstandete Fräszähne aufweist. Zwischen einem dem Schraubenschaft zugewandten Ende der Fräszähne und einem Beginn des Schraubengewindes sind um den Schraubenschaft umlaufende Rippen oder Vorsprünge vorgesehen. Die Rippen oder Vorsprünge sind ringförmig mit der Steigung null ausgebildet und können eine abgerundete Außenkontur oder eine dreieckige oder sägezahnartige Außenkontur aufweisen. Im Falle einer sägezahnartigen Außenkontur sind die steileren Flanken der Unterseite des Schraubenkopfs zugewandt.

Mit der Erfindung soll eine Schraube für Holz, Holzwerkstoffe und holzähnliche Materialien bereitgestellt werden, deren Schraubenkopf sich beim Einschrauben zuverlässig in die Oberfläche des Werkstücks einsenken lässt.

Erfindungsgemäß ist hierzu eine Schraube mit den Merkmalen von Anspruch 1 vorgesehen. Es ist eine Schraube für Holz, Holzwerkstoffe und holzähnliche Materialien mit einem Schraubenschaft, einem Schraubenkopf mit einer Antriebsausbildung an einem Ende des Schraubenschafts und einem Schraubengewinde auf wenigstens einem Abschnitt des Schraubenschafts vorgesehen, wobei eine dem Schraubenschaft zugewandte Unterseite des Schraubenkopfs mit mehreren, in Umfangsrichtung voneinander beabstandeten Fräszähnen versehen ist, bei der die Fräszähne eine dreieckige Grundfläche und eine geradlinige Fräskante aufweisen, wobei eine Höhe des Fräszahns sich ausgehend von der Fräskante in Umfangsrichtung verringert.

Durch Fräszähne mit einer dreieckigen Grundfläche und einer geradlinige Fräskante lassen sich auch sehr harte, langfaserige und/oder zähe Materialien, speziell Terrassendielen aus tropischen Harthölzern, zuverlässig auffräsen, so dass der Schraubenkopf in die Oberfläche des Werkstücks eingesenkt werden kann. Insbesondere kann erreicht werden, dass die den Schraubenkopf umgebende Oberfläche des Werkstücks nicht beschädigt wird oder sich die den Schraubenkopf umgebende Oberfläche des Werkstücks nicht ein Stück weit einsenkt. Gerade bei Terrassendielen liegen die Schraubenköpfe im Sichtbereich, so dass ein Einsenken der den Schraubenkopf umgebenden Oberfläche des Werkstücks vermieden werden sollte. Die geradlinige Fräskante der Fräszähne sorgt für eine gute Fräswirkung. Die dreieckige Grundfläche der Fräszähne und die sich ausgehend von der Fräskante in Umfangsrichtung verringernde Höhe der Fräszähne schafft Platz zum Aufnehmen von beim Einsenken des Schraubenkopfs entstehenden Spänen.

In Weiterbildung der Erfindung ist die Fräskante parallel zur Mittellängsachse der Schraube angeordnet.

In Weiterbildung der Erfindung sind die Fräszähne als Vorsprünge auf einer Kegelstumpffläche mit kreisförmigem Querschnitt ausgebildet.

In Weiterbildung der Erfindung verringert sich eine Höhe jedes Fräszahns gemessen zu der Kegelstumpffläche in einer Richtung vom Schraubenkopf zu der Schraubenspitze.

Dadurch ist die Höhe jedes Fräszahns an der Unterseite des Schraubenkopfs am größten. An der Unterseite des Schraubenkopfs muss auch am meisten Material abgefräst werden, da dort der Durchmesser des Schraubenkopfs bei einer Senkkopfschraube in der Regel bereits seine größte Abmessung hat.

In Weiterbildung der Erfindung sind an der Unterseite des Schraubenkopfs mehrere Flächenabschnitte zwischen den Fräszähnen vorgesehen, die sich ausgehend vom Außenumfang des Schraubenkopfs mit einer Hauptkomponente radial nach innen erstrecken, wobei die Flächenabschnitte mit der Mittellängsachse einen Winkel zwischen 95° und 115°, insbesondere 105°, einschließen. Zu einer Ebene, die senkrecht zur Mittellängsachse angeordnet ist, sind die Flächenabschnitte also in einem Winkel von 5° bis 25° angeordnet.

Diese Flächenabschnitte füllen an der Unterseite des Schraubenkopfs die Zwischenräume zwischen den Fräszähnen aus. Indem diese Flächenabschnitte in einem Winkel von mehr als 90° zur Mittellängsachse angeordnet sind, bewirken diese Flächenabschnitte eine Verdrängung des Materials des Werkstücks beim Einsenken der Schraube nach außen. Auch hierdurch wird zu einem zuverlässigen Einsenken der Schraube ohne nachteilige Beeinflussung der den Schraubenkopf umgebenden Oberfläche des Werkstücks beigetragen. In Richtung auf die Schraubenspitze zu schließen sich an die Flächenabschnitte Abschnitte einer Kegelstumpffläche mit deutlich steilerem Winkel, insbesondere zwischen 130° und 150°, insbesondere 135°. an, auf der die Fräszähne angeordnet sind. Ein Kopfwinkel oder Kegelwinkel dieser Kegelstumpffläche liegt dann zwischen 100° und 60°, insbesondere 90°.

In Weiterbildung der Erfindung ist in Richtung von dem Schraubenkopf auf die Schraubenspitze zu zwischen dem Ende der Fräszähne und dem Beginn eines Halteabschnitts oder dem Beginn eines glatten Schraubenschaftabschnitts eine konkave Fläche mit kreisförmigem Querschnitt, eine Konusmantelfläche oder ein Doppelkonus mit zwei aneinander anschließenden Konusmantelflächen mit unterschiedlichem Konuswinkel angeordnet.

Mittels einer solchen konkaven, konusförmigen oder doppelkonusförmigen Übergangsfläche kann beim Eindrehen der Schraube das entstehende Bohrloch aufgeweitet werden.

Gemäß der Erfindung ist zwischen dem Schraubenkopf und dem Schraubengewinde ein Halteabschnitt mit sägezahnartiger Außenkontur vorgesehen.

Mittels eines solchen Halteabschnitts kann die Haltekraft der Schraube erhöht werden.

Gemäß der Erfindung weist die sägezahnartige Außenkontur steile Flanken und flache Flanken auf, wobei die, bezogen auf die Mittellängsachse, steilen Flanken der Schraubenspitze zugewandt sind und die flachen Flanken dem Schraubenkopf zugewandt sind.

Der Halteabschnitt hat auf das Werkstück damit eine Haltewirkung, die entgegen einer Bewegung des Werkstücks entlang dem Schraubenschaft nach oben in Richtung auf den Schraubenkopf wirkt. Beispielsweise werden beim Befestigen von Terrassendielen auf einer Unterkonstruktion die Terrassendielen dann, wenn der Halteabschnitt in die Terrassendielen eingreift, nach unten in Richtung auf die Unterkonstruktion gedrückt. Im fertig montierten Zustand wird durch den Halteabschnitt mit der sägezahnartigen Außenkontur verhindert, dass sich die Terrassendielen entlang dem Schraubenschaft nach oben, in Richtung auf den Schraubenkopf zu bewegen. Dies ist bei Außenterrassen oft zu beobachten, wenn sich durch Feuchtigkeitseinfluss die Terrassendielen verformen. Mit der erfindungsgemäßen Schraube kann hier Abhilfe geschaffen werden.

In Weiterbildung der Erfindung liegt ein Verhältnis zwischen einem Außendurchmesser der sägezahnartigen Außenkontur und einem Kerndurchmesser der sägezahnartigen Außenkontur zwischen 1,05 und 1,2. Das Verhältnis zwischen Außendurchmesser und Kerndurchmesser ist damit im Halteabschnitt deutlich kleiner als im Bereich des Schraubengewindes, beispielsweise ein Viertel bis ein Drittel kleiner.

Gemäß der Erfindung ist die sägezahnartige Außenkontur gewindeartig ausgebildet.

Auf diese Weise lässt sich der Halteabschnitt vergleichsweise leicht durch ein Werkstück hindurchbewegen.

Gemäß der Erfindung ist eine Steigung der gewindeartig ausgebildeten sägezahnartigen Außenkontur gleichsinnig wie die Steigung des Schraubengewindes und kleiner als eine Steigung des Schraubengewindes.

Beim Eindrehen der Schraube durch ein zu befestigendes Werkstück hindurch und in eine Unterkonstruktion, beispielsweise beim Einschrauben in eine Terrassendiele, wird dadurch das Werkstück während des Einschraubens gegen die Unterkonstruktion gedrückt. Dies sorgt für eine sichere und zuverlässig an der Unterkonstruktion anliegende Montage des Werkstücks.

In Weiterbildung der Erfindung liegt ein Verhältnis der Steigung der gewindeartig ausgebildeten sägezahnartigen Außenkontur und der Steigung des Schraubengewindes zwischen 0,75 und 0,9.

Beispielsweise beträgt eine Steigung der sägezahnartigen Außenkontur 1,8 und eine Steigung des Schraubengewindes 2,2. Mittels eines Verhältnisses der Steigungen zwischen 0,75 und 0,9 wird eine zuverlässige Anpresswirkung eines Werkstücks an eine Unterkonstruktion beim Eindrehen der erfindungsgemäßen Schraube erzielt.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und/oder beschriebenen Ausführungsformen lassen sich dabei in beliebiger Weise kombinieren, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind. In den Zeichnungen zeigen:
- Fig. 1: eine Seitenansicht einer erfindungsgemäßen Schraube,
- Fig. 2: eine Seitenansicht der erfindungsgemäßen Schraube der Fig. 1, wobei die Schraube ein Stück weit um ihre Längsachse verdreht wurde,
- Fig. 3: eine Ansicht der Schraube der Fig. 1 von schräg oben,
- Fig. 4: eine Ansicht der Schraube der Fig. 1 von schräg unten,
- Fig. 5: eine abschnittsweise Seitenansicht der Schraube der Fig. 1,
- Fig. 6: eine Schnittansicht der Schraube der Fig. 1, wobei die Schnittebene geringfügig gegenüber der Mittellängsachse versetzt ist,
- Fig. 7: eine vergrößerte Darstellung eines Abschnitts der Schnittansicht der Fig. 6,
- Fig. 8: die Schraube der Fig. 1 von unten,
- Fig. 9: eine teilweise Ansicht der Schraube der Fig. 1 von schräg unten auf die Unterseite des Schraubenkopfs,
- Fig. 10: eine weitere Teilansicht der erfindungsgemäßen Schraube auf die Unterseite des Schraubenkopfs,
- Fig. 11: eine Seitenansicht des Abschnitts der erfindungsgemäßen Schraube mit dem Schraubenkopf,
- Fig. 12: eine weitere abschnittsweise Seitenansicht des Abschnitts der erfindungsgemäßen Schraube mit dem Schraubenkopf, wobei die Schraube gegenüber der Ansicht der Fig. 11 geringfügig um ihre Mittellängsachse gedreht wurde, und
- Fig. 13: eine Schnittansicht des Schraubenkopfs der erfindungsgemäßen Schraube, wobei die Schnittebene geringfügig gegenüber der Mittellängsachse versetzt ist.

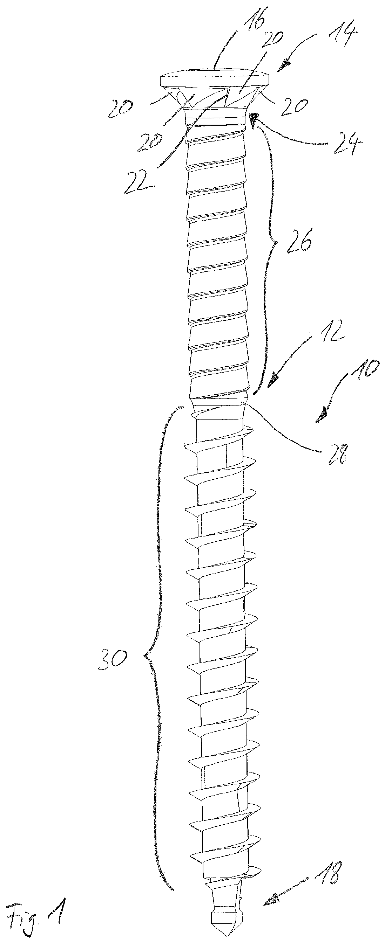

Fig. 1 zeigt eine erfindungsgemäße Schraube 10 in einer Seitenansicht. Die Schraube 10 weist einen Schraubenschaft 12 und einen Schraubenkopf 14 auf, wobei der Schraubenkopf 14 mit einer Antriebsausbildung 16 versehen ist, die in Fig. 1 kaum zu erkennen ist. Gegenüber dem Schraubenkopf 14 ist eine Schraubenspitze 18 am gegenüberliegenden Ende des Schraubenschafts 12 angeordnet. Die Schraubenspitze 18 ist bei der dargestellten Ausführungsform der Schraube 10 als Bohrspitze ausgebildet. Im Rahmen der Erfindung kann die Schraubenspitze 18 aber auch als einfache, sich verjüngende Spitze ausgebildet sein.

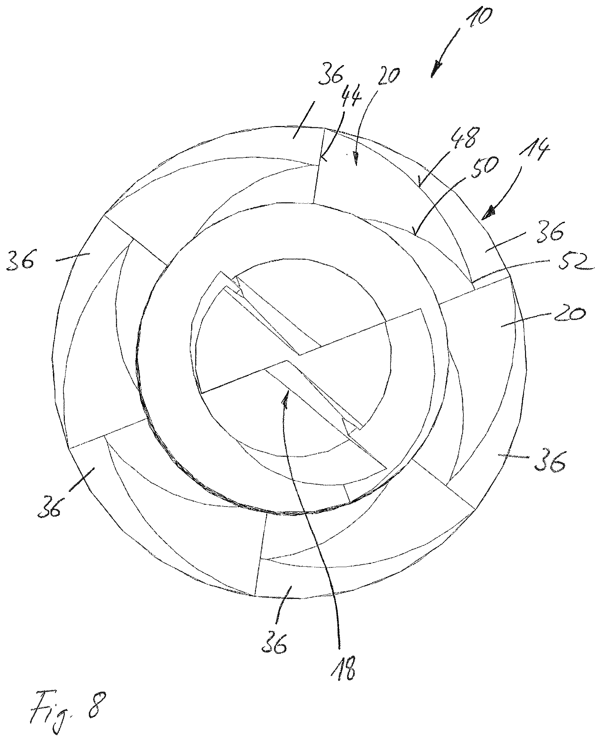

An einer dem Schraubenschaft 12 zugewandten Unterseite des Schraubenkopfs 14 sind mehrere, in Umfangsrichtung voneinander beabstandete Fräszähne 20 vorgesehen. Insgesamt sind an der Unterseite des Schraubenkopfs sechs Fräszähne 20 vorgesehen, vgl. Fig. 8. In der Darstellung der Fig. 1 sind lediglich vier Fräszähne zu erkennen. Die Fräszähne 20 weisen jeweils eine dreieckartige Grundfläche auf. Es ist bereits in der Darstellung der Fig. 1 zu erkennen, dass sich eine Höhe der Fräszähne in Umfangsrichtung und entgegen der vorgesehenen Einschraubrichtung, in Fig. 1 also nach rechts, verringert. Das in Fig. 1 jeweils linke Ende der Fräszähne 20 ist durch eine geradlinige Fräskante 22 definiert. Im Rahmen der Erfindung können 4 bis 10 Fräszähne vorgesehen sein.

In Richtung auf die Schraubenspitze 18 zu schließt sich an die Fräszähne 20 eine konkave Fläche 24 mit kreisförmigem Querschnitt an. Diese konkave Fläche 24 geht dann in einen Halteabschnitt 26 über, der eine gewindeartig ausgebildete sägezahnartige Außenkontur aufweist.

An den Halteabschnitt 26 schließt sich in Richtung auf die Schraubenspitze 18 zu eine sich verjüngende Kegelstumpffläche 28 an. Auf die Kegelstumpffläche 28 folgt dann ein Abschnitt des Schraubenschafts mit einem Schraubengewinde 30. Bei der dargestellten Ausführungsform endet das Schraubengewinde 30 im oberen Bereich der Bohrspitze 18. Wenn die Schraube mit einer sich beispielsweise kegelförmig verjüngenden Spitze versehen ist, kann sich das Schraubengewinde 30 auch bis zum Ende der Spitze erstrecken.

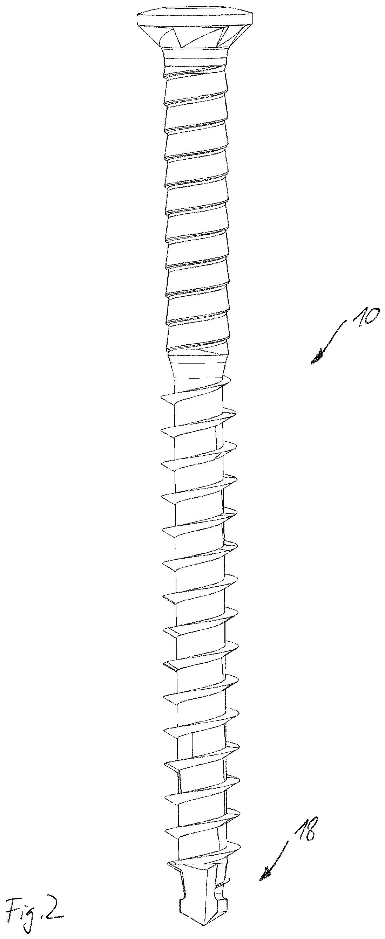

Fig. 2 zeigt die Schraube 10 in einer weiteren Seitenansicht, wobei die Schraube 10 gegenüber der Darstellung der Fig. 1 geringfügig um ihre Mittellängsachse verdreht wurde. Dies ist an der Bohrspitze 18 in Fig. 2 zu erkennen. Die Bohrspitze 18 weist zwei im Querschnitt dreieckartige Hälften auf, vgl. Fig. 8, die sich in Richtung auf die Mittellängsachse zu verjüngen. Dadurch sind zwei Schneidkanten an der Bohrspitze gebildet. Durch die beiden dreieckartigen Hälften wird im Bereich der Bohrspitze 18 ausreichend Platz zur Aufnahme von beim Bohren entstehender Späne geschaffen.

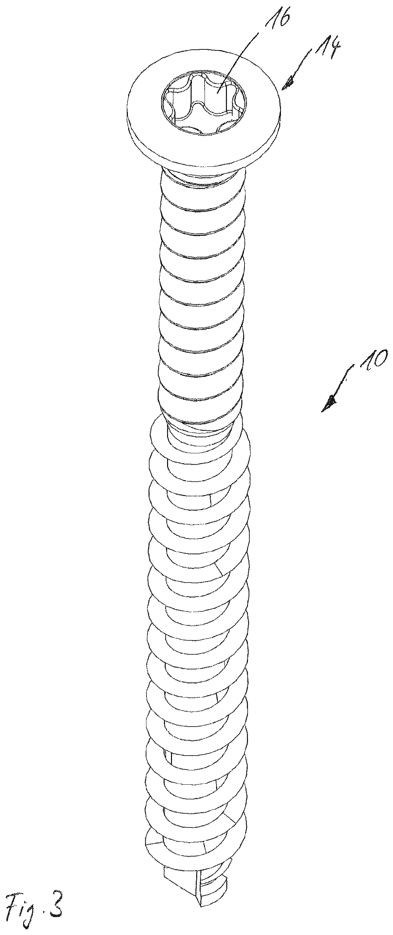

Fig. 3 zeigt eine Ansicht der Schraube 10 von schräg oben. In dieser Ansicht ist die Antriebsausbildung 16 im Schraubenkopf 14 gut zu erkennen. Bei der dargestellten Ausführungsform ist die Antriebsausbildung 16 als Innenantrieb mit zylindrischen, gekrümmten Flächen ausgebildet. Im Rahmen der Erfindung kann die Antriebsausbildung 16 aber beispielsweise auch als Innensechskant, als erhabener Sechskant, als Kreuzschlitz oder sonst in beliebiger Weise ausgebildet sein.

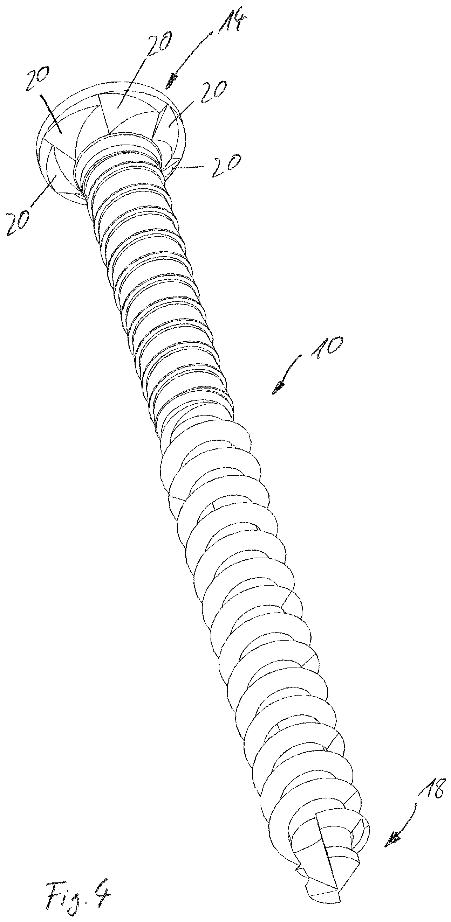

Fig. 4 zeigt die Schraube 10 in einer Ansicht von schräg unten. Zu erkennen ist die Ausbildung der Schraubenspitze 18 und weiter sind auch die Fräszähne 20 an der Unterseite des Schraubenkopfs 14 zu erkennen. In dieser Ansicht und in der Ansicht der Fig. 8 ist gut zu erkennen, dass die Fräszähne 20 eine dreieckartige Grundfläche mit einer geraden Basis aufweisen. Eine dem Außenumfang zugewandte Begrenzungslinie jedes Fräszahns 20 ist konvex ausgebildet. Eine der Mittellängsachse zugewandte Begrenzung jedes Fräszahns 20 ist konkav ausgebildet. Dadurch erhalten die Fräszähne 20 eine dreieckartige Grundfläche in Form einer Haifischflosse, siehe auch Fig. 8.

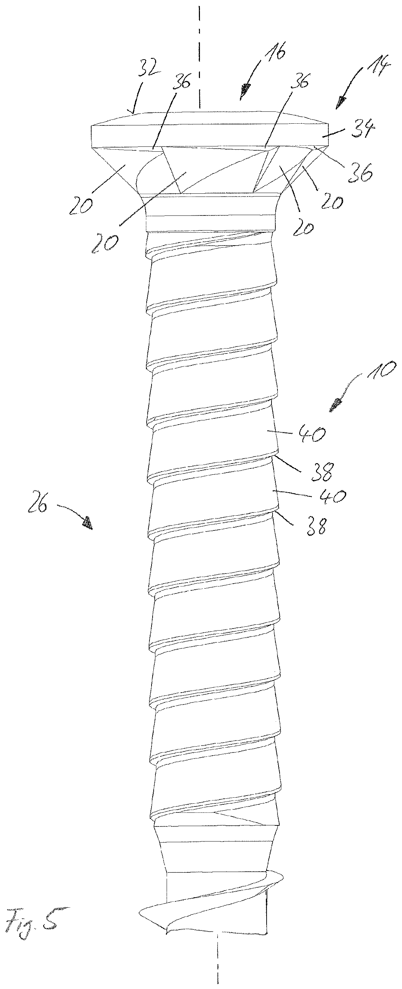

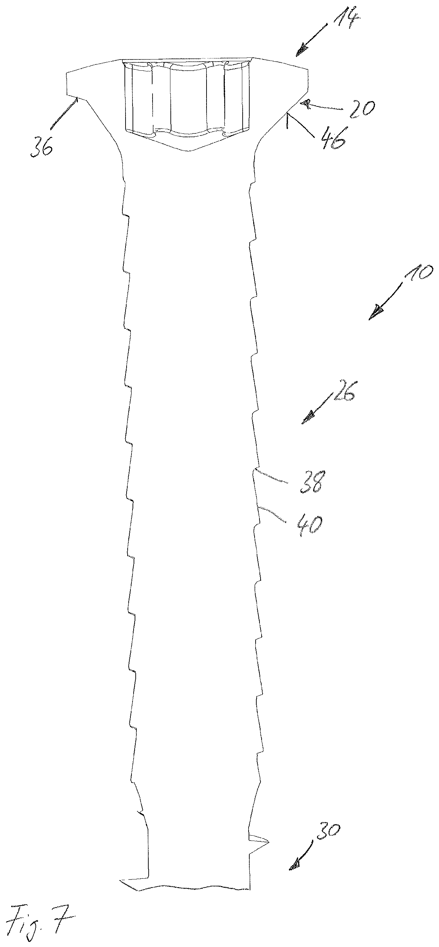

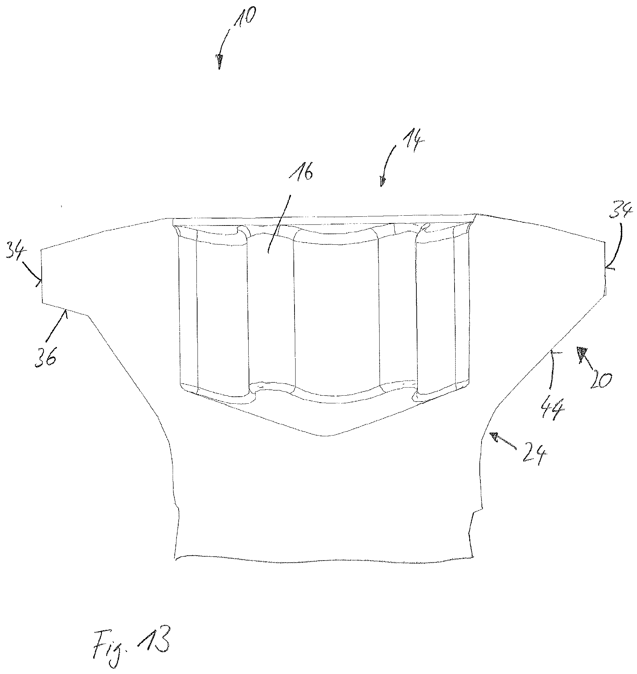

Fig. 5 zeigt eine abschnittsweise vergrößerte Darstellung der Schraube 10 der Fig. 1. Der Schraubenkopf 14 weist eine konvexe Oberseite 32 auf, in der zentrisch die Antriebsausbildung 16 angeordnet ist. Die Oberseite kann beispielsweise auch eben ausgebildet sein. Ein Außenumfang des Schraubenkopfs 14 ist durch eine Kreiszylinderfläche 34 gebildet. Ausgehend vom Außenumfang wird die Unterseite des Schraubenkopfs 40 abschnittsweise durch Flächenstücke 36 gebildet, die sich ausgehend vom Außenumfang mit einer Hauptkomponente radial nach innen erstrecken. Die Flächenstücke 36 füllen die Abstände zwischen den Fräszähnen 20 an der Unterseite des Schraubenkopfs 14 aus. Die Flächenstücke 36 sind Teil einer gedachten, umlaufenden Kegelstumpffläche, die mit der Mittellängsachse, in der Darstellung der Fig. 5 gemessen nach unten, einen Winkel von mehr als 90° einschließt, siehe auch Fig. 7 und Fig. 13. Die Fräszähne 20 sind unterhalb der Flächenstücke 36 durch Abschnitte einer Kegelstumpffläche mit deutlich steilerem Winkel zur Mittellängsachse getrennt, insbesondere 135°, beispielsweise zwischen 130° und 140°.

Zu erkennen ist in Fig. 5 die sägezahnartige Außenkontur des Halteabschnitts 26. Die sägezahnartige Außenkontur weist steile Flanken 38 und flache Flanken 40 auf. Die steilen Flanken 38 sind der Schraubenspitze 18 zugewandt, in Fig. 5 also nach unten gewandt. Die flachen Flanken 40 sind dem Schraubenkopf 14 zugewandt, in Fig. 5 also nach oben gewandt. Mit der Mittellängsachse schließen bei der dargestellten Ausführungsform die flachen Flanken einen Winkel von etwa 10° ein. Die steilen Flanken 38 schließen mit der Mittellängsachse bei der dargestellten Ausführungsform einen Winkel von etwa 105° ein, jeweils gemessen in der rechten Hälfte der Fig. 5 und im Uhrzeigersinn.

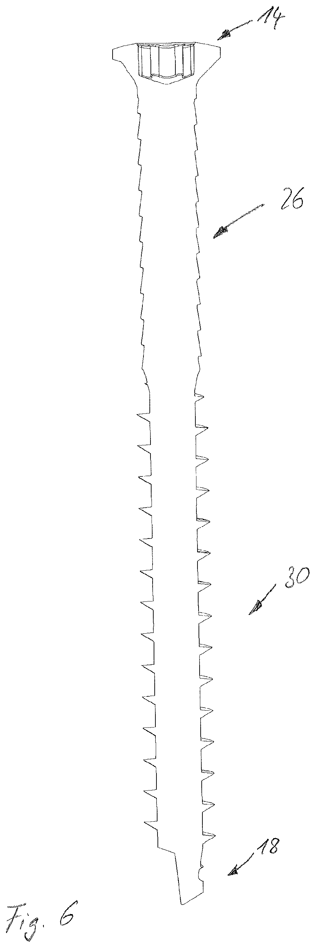

Fig. 6 zeigt eine Schnittansicht der erfindungsgemäßen Schraube. Zu erkennen ist die sägezahnartige Außenkontur im Halteabschnitt 26. Die sägezahnartige Außenkontur im Halteabschnitt 26 ist, vgl. Fig. 5, gewindeartig ausgebildet. Ein Verhältnis der Steigungen der Steigung der gewindeartig ausgebildeten sägezahnartigen Außenkontur 26 und der Steigung des Schraubengewindes 30 liegt zwischen 0,75 und 0,9. Bei der dargestellten Ausführungsform beträgt die Steigung der sägezahnartigen Außenkontur 1,8 und die Steigung des Schraubengewindes 30 beträgt 2,2. Die sägezahnartige Außenkontur 26 weist eine deutlich geringere Profiltiefe auf als das Schraubengewinde.

Fig. 7 zeigt eine vergrößerte Schnittansicht des Halteabschnitts 26 der Schraube 10. In dieser vergrößerten Darstellung sind die steilen Flanken 38 und die flachen Flanken 40 der sägezahnartigen Außenkontur gut zu erkennen.

An der Unterseite des Schraubenkopfs 14 ist in der rechten Hälfte der Darstellung der Fig. 7 eine Fräskante 44 eines Fräszahns 20 zu erkennen. Die Fräskante 44 schließt in der Seitenansicht der Fig. 7 mit der Mittellängsachse einen Winkel von etwa 125° bis 135° ein, insbesondere 130°. In der linken Hälfte der Darstellung der Fig. 7 ist eines der Flächenstücke 36 zu erkennen. Wie ausgeführt wurde, schließt das Flächenstück 36 mit der Mittellängsachse, in Fig. 7 entgegen dem Uhrzeigersinn nach unten gemessen, einen Winkel von etwa 105° ein. Die Flächenstücke 36 haben dadurch auf das Material des Werkstücks eine Verdrängungswirkung mit einer Komponente nach radial außen.

Fig. 8 zeigt die Schraube 10 der Fig. 1 von unten. In dieser Ansicht ist die Bohrspitze 18 gut zu erkennen. An der Unterseite des Schraubenkopfs 14 sind die Flächenstücke 36 zu erkennen sowie insgesamt sechs Fräszähne 20. Jeder Fräszahn 20 weist eine dreieckartige Grundfläche auf, wobei eine Basis 46 der Grundfläche geradlinig ist. In der Ansicht der Fig. 8 fällt die Basis 46 mit der geraden Fräskante 44 zusammen. Eine in radialer Richtung außen liegende Begrenzung 48 ist konvex gekrümmt. Eine radial innen liegende Begrenzung 50 jedes Fräszahns 20 ist konvex gekrümmt. Die beiden Begrenzungen 48, 50 laufen an einer Spitze 52 der dreieckartigen Grundfläche zusammen. Die dreieckartige Grundfläche hat in der Ansicht der Fig. 8 dadurch die Form einer Haifischflosse. In geringem Abstand von der Spitze 52 eines Fräszahns folgt dann in Umfangsrichtung der nächste Fräszahn 20. Um eine Fräswirkung mit den Fräszähnen 20 zu erzielen, müsste die Schraube 10 in der Darstellung der Fig. 8 entgegen dem Uhrzeigersinn gedreht werden. Die Schraube 10 ist infolgedessen als rechtsdrehende Schraube ausgebildet, siehe auch Fig. 1.

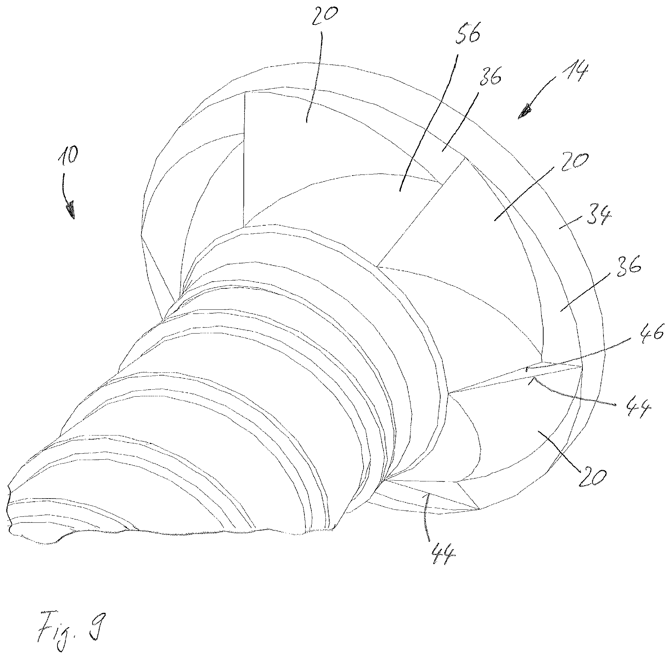

Fig. 9 zeigt eine abschnittsweise Darstellung der Schraube 10 von unten auf den Schraubenkopf 14. In dieser Ansicht ist zu erkennen, dass sich die Fräszähne aus einer kegelstumpfförmigen Fläche mit kreisförmigem Querschnitt 56 erheben, die in Richtung auf die Unterseite des Schraubenkopfs 14 in die Fräszähne 20 bzw. in die Flächenstücke oder Flächenabschnitte 36 übergeht. In der Ansicht der Fig. 9 ist an zwei der Fräszähne 20 sowohl die geradlinige Fräskante 44 als auch die Basis 46 der dreieckartigen Grundfläche zu erkennen. Die Fräskante 44 erstreckt sich bis zum Außenumfang des Schraubenkopfs 14, also bis zu der Kreiszylinderfläche 34, die den Außenumfang des Schraubenknopfs 14 definiert.

Fig. 9 ist weiter zu entnehmen, dass sich die Höhe jedes Fräszahns 20 in Umfangsrichtung, in Fig. 9 also im Uhrzeigersinn, bis auf Null verringert. Dadurch entstehen an der Unterseite des Schraubenkopfs 40 die Flächenstücke 36. Im Rahmen der Erfindung muss sich die Höhe der Fräszähne in Umfangsrichtung nicht notwendigerweise bis auf Null verringern.

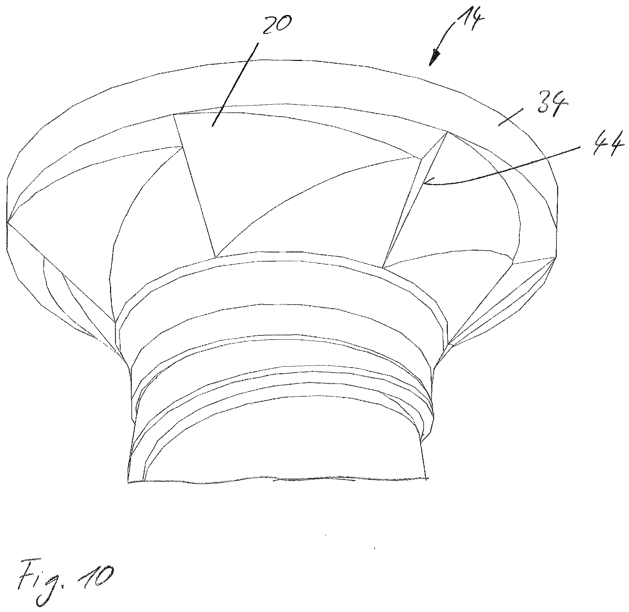

Fig. 10 zeigt eine weitere Ansicht des Schraubenkopfs 14 von seiner Unterseite her. Zu erkennen ist, dass durch die sich verringernde Höhe der Fräszähne 20 in Umfangsrichtung Platz zur Aufnahme von beim Einsenken des Schraubenkopfs 14 entstehenden Spänen bereitgestellt ist.

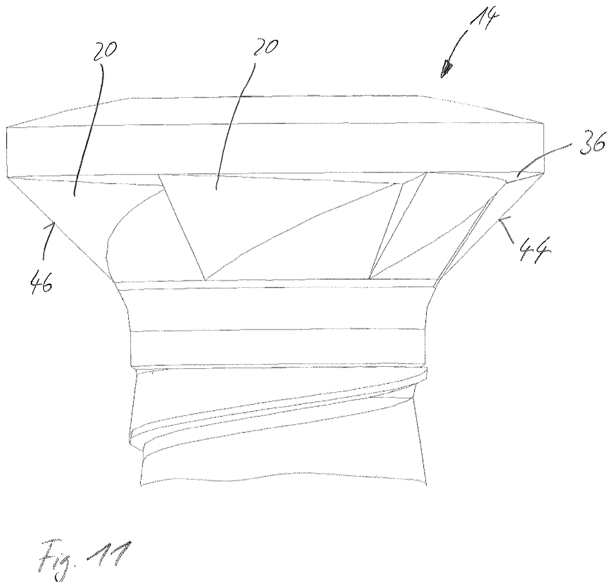

Fig. 11 zeigt eine abschnittsweise Seitenansicht des Schraubenkopfs 14. In dieser Ansicht ist gut zu erkennen, dass die Flächenstücke 36 mit der Mittellängsachse einen Winkel von mehr als 90° einschließen, in Fig. 11 rechts im Uhrzeigersinn gemessen. Wie ausgeführt wurde, beträgt bei der dargestellten Ausführungsform dieser Winkel 105°.

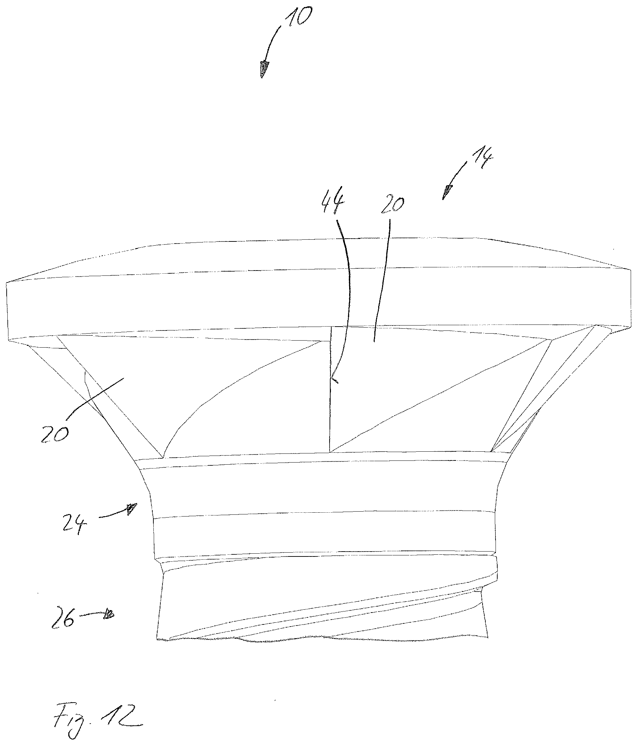

Fig. 12 zeigt eine weitere abschnittsweise Seitenansicht auf den Schraubenkopf 14, wobei die Schraube gegenüber der Darstellung der Fig. 11 ein Stück weit um die Mittellängsachse gedreht wurde. An dem in Fig. 12 dem Betrachter zugewandten Fräszahn 20 ist zu erkennen, dass die gerade Fräskante 44 in der Ansicht der Fig. 12 parallel zur Mittellängsachse der Schraube 10 verläuft. Fig. 7 und Fig. 12 ist demnach zu entnehmen, dass jeweils eine Fräskante 44 und die Mittellängsachse in einer gemeinsamen Ebene liegen. Geht der Blick senkrecht auf diese Ebene, siehe Fig. 7, schließt die Fräskante 44 mit der Mittellängsachse einen Winkel von etwa 125° bis 135° ein, insbesondere 130°. Geht der Blick parallel auf diese Ebene, siehe Fig. 12, fluchten die Fräskante 44 und die Mittellängsachse.

Weiter ist die konkav ausgebildete Übergangsfläche 24 zwischen dem unteren Ende der Fräszähne 20 und dem Beginn des Halteabschnitts 26 zu erkennen. Die Übergangsfläche 24 kann im Rahmen der Erfindung auch als Konusmantelfläche oder als Doppelkonus mit zwei aneinander anschließenden Konusmantelflächen mit unterschiedlichem Konuswinkel ausgebildet sein. Zu den Fräszähnen 20 hin ist der Konuswinkel dann größer als zu dem Halteabschnitt 26 hin.

Fig. 13 zeigt eine abschnittsweise Schnittansicht der Schraube 10 im Bereich des Schraubenkopfs 14. Auch in dieser Ansicht ist noch einmal gut zu erkennen, dass sich die in Fig. 13 rechts zu erkennende Fräskante 44 eines Fräszahns 20 geradlinig von der Übergangsfläche 24 bis zum Außenumfang des Schraubenkopfs 14, also bis zu der Randfläche 34 erstreckt. Die Randfläche 34 wird auch als Presskontur bezeichnet und entsteht durch Zusammenpressen des Rohlings zwischen einer Matrize und einem Stempel. Die Mantelfläche 36 ist in Fig. 13 zylindrisch dargestellt, an der fertiggestellten Schraube aber in der Regel leicht nach außen gekrümmt. In Fig. 13 ist in der linken Hälfte zu erkennen, dass die Flächenstücke 36 Abschnitte einer gedachten Kegelstumpffläche um die Mittellängsachse bilden und, in Fig. 13 entgegen dem Uhrzeigersinn gemessen nach unten, mit der Mittellängsachse einen Winkel von etwa 105° einschließen und dadurch eine Verdrängungswirkung auf das Material des Werkstücks radial nach außen und nach unten haben.

## Patentansprüche

1. Schraube für Holz, Holzwerkstoffe und holzähnliche Materialien, mit einem Schraubenschaft, einem Schraubenkopf (14) mit einer Antriebsausbildung (16) an einem Ende des Schraubenschafts und einem Schraubengewinde (30) auf wenigstens einem Abschnitt des Schraubenschafts, wobei eine dem Schraubenschaft zugewandte Unterseite des Schraubenkopfes (14) mit mehreren, in Umfangsrichtung voneinander beabstandeten Fräszähnen (20) versehen ist, wobei die Fräszähne (20) eine geradlinige Fräskante (44) aufweisen, wobei eine Höhe jedes Fräszahns (20) sich ausgehend von der Fräskante (44) in Umfangsrichtung verringert, **dadurch gekennzeichnet, dass** die Fräszähne (20) eine dreieckartige Grundfläche aufweisen, **dadurch gekennzeichnet, dass** zwischen dem Schraubenkopf (14) und dem Schraubengewinde (30) ein Halteabschnitt (26) mit sägezahnartiger Außenkontur vorgesehen ist, dass die sägezahnartige Außenkontur, bezogen auf die Mittellängsachse, steile Flanken (38) und flache Flanken (40) aufweist, wobei die steilen Flanken (38) der Schraubenspitze (18) zugewandt sind und die flachen Flanken (40) dem Schraubenkopf (14) zugewandt sind, dass die sägezahnartige Außenkontur gewindeartig ausgebildet ist und dass eine Steigung der gewindeartig ausgebildeten sägezahnartigen Außenkontur gleichsinnig ist wie die Steigung des Schraubengewindes (30) und kleiner ist als eine Steigung des Schraubengewindes (30).

2. Schraube nach Anspruch 1, **dadurch gekennzeichnet, dass** die Fräskante (44) parallel zur Mittellängsachse angeordnet ist.

3. Schraube nach Anspruch 1 oder 2, **dadurch gekennzeichnet, dass** die Fräszähne (20) als Vorsprünge auf einer Kegelstumpffläche (56) mit kreisförmigem Querschnitt ausgebildet sind.

4. Schraube nach Anspruch 3, **dadurch gekennzeichnet, dass** sich eine Höhe jedes Fräszahns (20) gemessen zu der Kegelstumpffläche (56) in einer Richtung vom Schraubenkopf (14) zu der Schraubenspitze (18) verringert.

5. Schraube wenigstens einem der vorstehenden Ansprüche, **dadurch gekennzeichnet, dass** die Fräskante (44) sich bis zu einem Außenumfang des Schraubenkopfes (14) an der Unterseite des Schraubenkopfes erstreckt.

6. Schraube nach wenigstens einem der vorstehenden Ansprüche, **dadurch gekennzeichnet, dass** an der Unterseite des Schraubenkopfes (14) mehrere Flächenstücke (36) zwischen den Fräszähnen (20) vorgesehen sind, die sich ausgehend vom Außenumfang des Schraubenkopfes (14) mit einer Hauptkomponente radial nach innen erstrecken, wobei die Flächenstücke (36) mit der Mittellängsachse einen Winkel zwischen 95 Grad und 115 Grad, insbesondere 105 Grad, einschließen.

7. Schraube nach wenigstens einem der vorstehenden Ansprüche, **dadurch gekennzeichnet, dass** in Richtung von dem Schraubenkopf (14) auf die Schraubenspitze (18) zu zwischen dem Ende der Fräszähne (20) und dem Beginn eines Halteabschnitts (26) oder dem Beginn eines glatten Schraubenschaftabschnitts eine konkave Fläche (24) mit kreisförmigem Querschnitt, eine Konusmantelfläche oder zwei aneinander anschließende Konusmantelflächen mit unterschiedlichem Konuswinkel angeordnet ist oder angeordnet sind.

8. Schraube nach einem der vorstehenden Ansprüche, **dadurch gekennzeichnet, dass** ein Verhältnis zwischen einem Außendurchmesser der sägezahnartigen Außenkontur und einem Kerndurchmesser der sägezahnartigen Außenkontur zwischen 1, 05 und 1,2 liegt.

9. Schraube nach einem der vorstehenden Ansprüche, **dadurch gekennzeichnet, dass** ein Verhältnis der Steigung der gewindeartig ausgebildeten sägezahnartigen Außenkontur und der Steigung des Schraubengewindes (30) zwischen 0,75 und 0,9 liegt.

## Claims

1. Screw for wood, wood-based materials and wood-like materials, having a screw shank, having a screw head (14) with a driving formation (16) at one end of the screw shank, and having a screw thread (30) on at least one portion of the screw shank, wherein a bottom side, facing towards the screw shank, of the screw head (14) is provided with multiple milling teeth (20) which are spaced apart from one another in a circumferential direction, wherein the milling teeth (20) have a rectilinear milling edge (44), wherein, proceeding from the milling edge (44), a height of each milling tooth (20) decreases in the circumferential direction, **characterized in that** the milling teeth (20) have a triangle-like base surface, **characterized in that** a holding portion (26) with a sawtooth-like outer contour is provided between the screw head (14) and the screw thread (30), **in that** the sawtooth-like outer contour has steep flanks (38) and shallow flanks (40) in relation to the central longitudinal axis, wherein the steep flanks (38) face towards the screw tip (18) and the shallow flanks (40) face towards the screw head (14), **in that** the sawtooth-like outer contour is of thread-like design, and **in that** a thread gradient of the sawtooth-like outer contour of thread-like design is co-directional in relation to the thread gradient of the screw thread (30) and is smaller than a thread gradient of the screw thread (30).

2. Screw according to Claim 1, **characterized in that** the milling edge (44) is arranged parallel to the central longitudinal axis.

3. Screw according to Claim 1 or 2, **characterized in that** the milling teeth (20) are in the form of projections on a frustoconical surface (56) with a circular cross section.

4. Screw according to Claim 3, **characterized in that** a height of each milling tooth (20) measured from the frustoconical surface (56) decreases in a direction from the screw head (14) to the screw tip (18).

5. Screw according to at least one of the preceding claims, **characterized in that** the milling edge (44) extends as far as an outer circumference of the screw head (14) at the bottom side of the screw head.

6. Screw according to at least one of the preceding claims, **characterized in that**, at the bottom side of the screw head (14), there are provided between the milling teeth (20) multiple surface pieces (36) which, proceeding from the outer circumference of the screw head (14), extend with a main component radially inwards, wherein the surface pieces (36) include with the central longitudinal axis an angle of between 95 degrees and 115 degrees, in particular 105 degrees.

7. Screw according to at least one of the preceding claims, **characterized in that** a concave surface (24) with a circular cross section, a cone lateral surface or two mutually adjoining cone lateral surfaces with different cone angles is/are arranged between the end of the milling teeth (20) and the beginning of a holding portion (26), or the beginning of a smooth screw-shank portion, in the direction from the screw head (14) to the screw tip (18).

8. Screw according to one of the preceding claims, **characterized in that** a ratio between an outer diameter of the sawtooth-like outer contour and a core diameter of the sawtooth-like outer contour is between 1.05 and 1.2.

9. Screw according to one of the preceding claims, **characterized in that** a ratio of the thread gradient of the sawtooth-like outer contour of thread-like design and the thread gradient of the screw thread (30) is between 0.75 and 0.9.

## Revendications

1. Vis pour bois, matériaux dérivés du bois et matériaux similaires au bois, avec une tige de vis, une tête (14) de vis avec une formation d'entraînement (16) sur une extrémité de la tige de vis et un filetage (30) de vis sur au moins une section de la tige de vis, un côté inférieur de la tête (14) de vis tourné vers la tige de vis étant pourvu de plusieurs dents de fraisage (20) espacées les unes des autres dans la direction périphérique, les dents de fraisage (20) comportant une arête de fraisage (44) rectiligne, une hauteur de chaque dent de fraisage (20) se réduisant dans la direction périphérique en partant de l'arête de fraisage (44), **caractérisée en ce que** les dents de fraisage (20) comportent une surface de base triangulaire, **caractérisée en ce qu'**une section de maintien (26) avec un contour extérieur de type dent de scie est prévue entre la tête (14) de vis et le filetage (30) de vis, que le contour extérieur de type dent de scie comporte, par rapport à l'axe longitudinal médian, des flancs pentus (38) et des flancs plats (40), les flancs pentus (38) étant tournés vers la pointe (18) de vis et les flancs plats (40) étant tournés vers la tête (14) de vis, que le contour extérieur de type dent de scie est réalisé à la manière d'un filetage, et qu'un pas du contour extérieur de type dent de scie réalisé à la manière d'un filetage est dans le même sens que le pas du filetage (30) de vis et est inférieur à un pas du filetage (30) de vis.

2. Vis selon la revendication 1, **caractérisée en ce que** l'arête de fraisage (44) est disposée parallèlement à l'axe longitudinal médian.

3. Vis selon la revendication 1 ou 2, **caractérisée en ce que** les dents de fraisage (20) sont réalisées en tant que parties faisant saillie sur une surface tronconique (56) avec une section transversale circulaire.

4. Vis selon la revendication 3, **caractérisée en ce qu'**une hauteur de chaque dent de fraisage (20), mesurée par rapport à la surface tronconique (56), se réduit dans une direction de la tête (14) de vis vers la pointe (18) de vis.

5. Vis selon au moins l'une des revendications précédentes, **caractérisée en ce que** l'arête de fraisage (44) s'étend sur le côté inférieur de la tête de vis jusqu'à une périphérie extérieure de la tête (14) de vis.

6. Vis selon au moins l'une des revendications précédentes, **caractérisée en ce que** sont prévues sur le côté inférieur de la tête (14) de vis plusieurs pièces planes (36) entre les dents de fraisage (20), qui s'étendent radialement vers l'intérieur avec une composante principale en partant de la périphérie extérieure de la tête (14) de vis, les pièces planes (36) formant avec l'axe longitudinal médian un angle entre 95 degrés et 115 degrés, en particulier de 105 degrés.

7. Vis selon au moins l'une des revendications précédentes, **caractérisée en ce qu'**une surface concave (24) avec une section transversale circulaire, une surface extérieure conique ou deux surfaces extérieures coniques se raccordant l'une à l'autre avec un angle conique différent est disposée ou sont disposées en direction de la tête (14) de vis vers la pointe (18) de vis entre l'extrémité de la dent de fraisage (20) et le début de la section de maintien (26) ou le début d'une section de tige de vis lisse.

8. Vis selon l'une des revendications précédentes, **caractérisée en ce qu'**un rapport entre un diamètre extérieur du contour extérieur de type dent de scie et un diamètre central du contour extérieur de type dent de scie est compris entre 1,05 et 1,2.

9. Vis selon l'une des revendications précédentes, **caractérisée en ce qu'**un rapport entre le pas du contour extérieur de type dent de scie réalisé à la manière d'un filetage et le pas du filetage (30) de vis est compris entre 0,75 et 0,9.
